# EUROPEAN PATENT APPLICATION

(11) **EP 4 317 026 A1**
(43) Date of publication of application: **07.02.2024**
(21) Application number: 22780748.4
(22) Date of filing: 28.03.2022
(51) Int. Cl.: B65G 1/04, B65G 1/137, G06Q 30/06

(54) **PICKUP/DELIVERY OR VENDING DEVICE**

(30) Priority: 31.03.2021 JP 2021059439
(71) Applicant: Daikin Industries, Ltd., Osaka-shi, Osaka 530-0001 (JP)
(72) Inventor: SATO, Kiichiro, Osaka-shi, Osaka 530-8323 (JP); MATSUI, Hidenori, Osaka-shi, Osaka 530-8323 (JP); MUKAIDANI, Toshiaki, Osaka-shi, Osaka 530-8323 (JP); YAMAUCHI, Junko, Osaka-shi, Osaka 530-8323 (JP); INOUE, Hiroko, Osaka-shi, Osaka 530-8323 (JP); KATADA, Chiharu, Osaka-shi, Osaka 530-8323 (JP)
(74) Representative: Hoffmann Eitle
(86) International application number: PCT/JP2022/015013
(87) International publication number: WO 2022/210537

(57) **Abstract**

A pickup and delivery or selling apparatus is transportable, and includes: a reserving section in which an article can be reserved; a receiving part in which the article to be reserved in the reserving section is received; a delivering part in which the article is delivered; a plurality of support members each used for supporting the article in the reserving section; a transfer unit configured to transfer the support members each supporting the article between the reserving section and either the receiving part or the delivering part; and an abnormality-managing unit configured to perform a predetermined response to an abnormality occurring in the support members.

## Description

### [Technical Field]

The present disclosure relates to pickup and delivery or selling apparatuses.

### [Background Art]

There is known a terminal that is constructed in the interior of a temperature-controlled transportable container and is for storing and delivering ordered items of food products (see PTL 1).

### [Citation List]

### [Patent Literature]

[PTL 1]
Japanese Laid-Open Patent Application No. 2020-193107

### [Summary of Invention]

### [Technical Problem]

In the existing techniques, however, it is not possible to perform a response to an abnormality occurring in a support member supporting an article that is to be picked up and delivered or sold.

The present disclosure provides a pickup and delivery or selling apparatus that can perform a response to an abnormality occurring in support members each supporting an article that is to be picked up and delivered or sold.

### [Solution to Problem]

The pickup and delivery or selling apparatus of the present disclosure is a transportable pickup and delivery or selling apparatus, and includes:
a reserving section in which an article can be reserved;
a receiving part in which the article to be reserved in the reserving section is received;
a delivering part in which the article is delivered;
a plurality of support members each used for supporting the article in the reserving section;
a transfer unit configured to transfer the support members each supporting the article between the reserving section and either the receiving part or the delivering part; and
an abnormality-managing unit configured to perform a predetermined response to an abnormality occurring in the support members.

According to the pickup and delivery or selling apparatus of the present disclosure, it is possible to perform the response to the abnormality occurring in the support members each supporting the article that is to be picked up and delivered or sold.

In the pickup and delivery or selling apparatus of the present disclosure, the abnormality-managing unit does not necessarily perform the predetermined response while the function of the pickup and delivery or selling is suspended in the pickup and delivery or selling apparatus.

In the pickup and delivery or selling apparatus of the present disclosure, the abnormality-managing unit does not necessarily perform the predetermined response while the pickup and delivery or selling apparatus is transported.

In the pickup and delivery or selling apparatus of the present disclosure, the article may be fruits and vegetables, pharmaceutical products, or processed foods, and the reserving section may freeze or refrigerate the article for storage.

In the pickup and delivery or selling apparatus of the present disclosure, an abnormality-detecting unit configured to detect the abnormality of the support members may be further included, and the abnormality-managing unit may perform the predetermined response to the support members having the abnormality detected by the abnormality-detecting unit.

In the pickup and delivery or selling apparatus of the present disclosure, the abnormality-managing unit may include a washing unit configured to wash the support members having the abnormality.

In the pickup and delivery or selling apparatus of the present disclosure, the abnormality-managing unit may include a replacing unit configured to replace the support members having the abnormality with the support members without the abnormality.

In the pickup and delivery or selling apparatus of the present disclosure, the abnormality-detecting unit may detect an input by a user regarding the abnormality of the support members, and the replacing unit may replace the support members having the abnormality detected based on the input with the support members without the abnormality.

In the pickup and delivery or selling apparatus of the present disclosure, the abnormality-detecting unit may detect damage of the support members, and the replacing unit may replace the support members having the damage detected by the abnormality-detecting unit with the support members without the abnormality.

In the pickup and delivery or selling apparatus of the present disclosure, the abnormality-detecting unit may detect contamination of the support members, and the abnormality-managing unit may wash the support members having the contamination detected by the abnormality-detecting unit or may replace the support members having the contamination detected by the abnormality-detecting unit with the support members without the abnormality.

In the pickup and delivery or selling apparatus of the present disclosure, a storing unit configured to store the plurality of support members without the abnormality may be further included, and the abnormality-managing unit may replace the support members having the abnormality with the support members without the abnormality that are stored in the storing unit.

In the pickup and delivery or selling apparatus of the present disclosure, a notifying unit configured to notify insufficiency in the number of the support members in response to the number of the support members stored in the storing unit becoming less than a predetermined lower limit may be further included.

In the pickup and delivery or selling apparatus of the present disclosure, the abnormality-managing unit may include an adding unit configured to add a member to the support members having the abnormality, the member being configured to overcome the abnormality.

### [Brief Description of Drawings]

[FIG. 1] FIG. 1 is a perspective view of an outer appearance of a pickup and delivery or selling apparatus according to one embodiment.
[FIG. 2] FIG. 2 is a cross-sectional lateral view, taken along a vertical plane, of the pickup and delivery or selling apparatus according to one embodiment.
[FIG. 3] FIG. 3 is a block diagram of one exemplary apparatus configuration of the pickup and delivery or selling apparatus according to one embodiment.
[FIG. 4] FIG. 4 is a block diagram of one exemplary functional configuration of a control device included in the pickup and delivery or selling apparatus according to one embodiment.
[FIG. 5] FIG. 5 is a flowchart of one exemplary procedure of an abnormality-managing process by the control device included in the pickup and delivery or selling apparatus according to one embodiment.
[FIG. 6] FIG. 6 is a cross-sectional lateral view, taken along a vertical plane, of a pickup and delivery or selling apparatus according to a first modified example.
[FIG. 7] FIG. 7 is a cross-sectional lateral view, taken along a vertical plane, of a pickup and delivery or selling apparatus according to a second modified example.
[FIG. 8] FIG. 8 is a cross-sectional lateral view, taken along a vertical plane, of a pickup and delivery or selling apparatus according to a third modified example.

### [Description of Embodiments]

Hereinafter, one embodiment will be described.

### (Overview of pickup and delivery or selling apparatus 100)

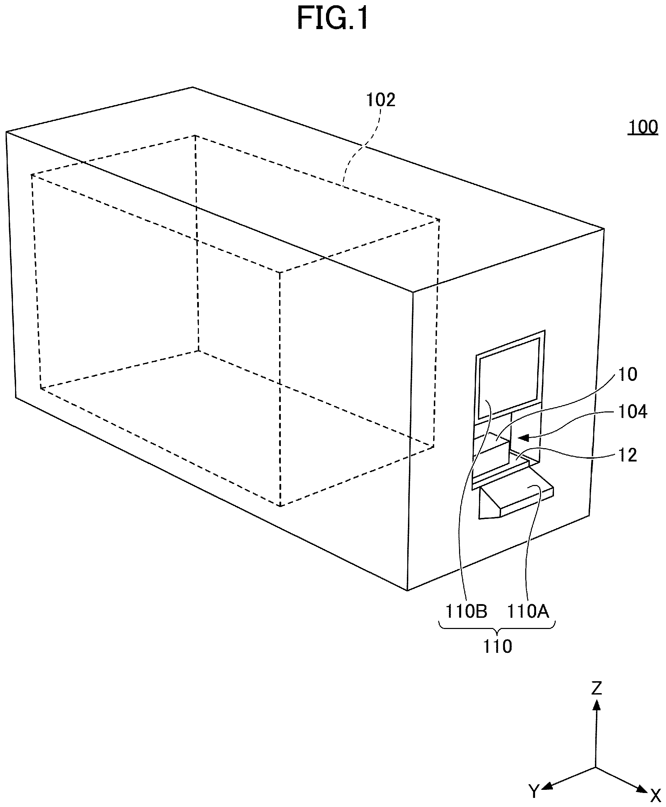

FIG. 1 is a perspective view of the outer appearance of the pickup and delivery or selling apparatus 100 according to one embodiment. The pickup and delivery or selling apparatus 100 as illustrated in FIG. 1 is a transportable apparatus in the form of a container. The pickup and delivery or selling apparatus 100 can be utilized as an apparatus that provides such an intended service as pickup and delivery of an article 10 or selling of the article 10. The pickup and delivery or selling apparatus 100 is transported by a given transporting unit (e.g., a truck) to, and installed in, a place where the service is to be provided.

As illustrated in FIG. 1, the pickup and delivery or selling apparatus 100 includes a reserving section 102. The reserving section 102 can reserve a plurality of articles 10. Also, the pickup and delivery or selling apparatus 100 has freezing and refrigerating functions. For storage, the pickup and delivery or selling apparatus 100 can freeze and refrigerate the plurality of articles 10 reserved in the reserving section 102.

Note that, suitable examples of the articles 10 frozen or refrigerated for storage by the pickup and delivery or selling apparatus 100 are fruits and vegetables, pharmaceutical products, or processed foods.

Also, as illustrated in FIG. 1, the pickup and delivery or selling apparatus 100 includes an opening 104. In the example as illustrated in FIG. 1, the opening 104 is provided in a front surface (a surface on the positive X-axis side) of the pickup and delivery or selling apparatus 100. The opening 104 is one example of the "receiving part" and the "delivering part". The opening 104 can receive, from the user, the article 10 to be reserved in the reserving section 102. Also, the opening 104 can deliver, to the user, the article 10 reserved in the reserving section 102.

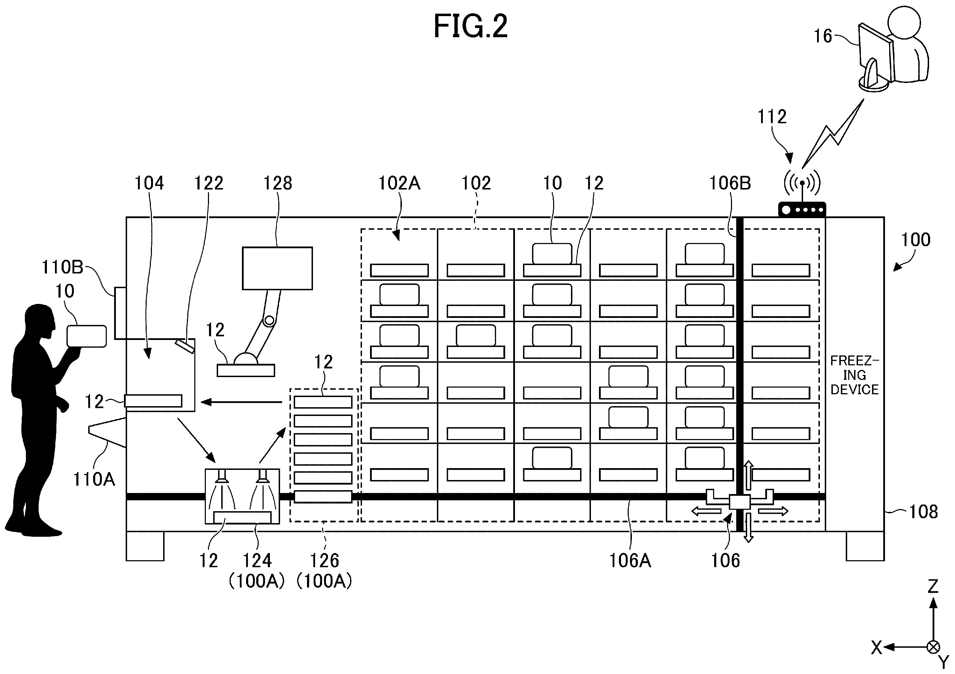

The article 10 that the opening 104 has received from the user is transferred to the reserving section 102 by a transfer device 106 (see FIG. 2) included in the pickup and delivery or selling apparatus 100 with the article 10 being placed on a tray 12, and is reserved in the reserving section 102 with the article 10 being placed on the tray 12.

Also, the article 10 reserved in the reserving section 102 is transferred by the transfer device 106 to the opening 104 with the article 10 being placed on the tray 12, and is delivered to the user from the opening 104 with the article 10 being placed on the tray 12.

The tray 12 is one example of the "support member". In the present embodiment, as one example of the "support member", the tray 12 in the form of a flat plate is used. Nonetheless, this is by no means a limitation, and the "support member" may have any shape (e.g., a box shape) as long as it can at least support the article 10 in the reserving section 102.

Note that, in the example as illustrated in FIG. 1, the pickup and delivery or selling apparatus 100 includes one opening 104 as one example of the "receiving part" and the "delivering part". Nonetheless, this is by no means a limitation, and the pickup and delivery or selling apparatus 100 may include a first opening serving as the "receiving part" and a second opening serving as the "delivering part".

Also, as illustrated in FIG. 1, the pickup and delivery or selling apparatus 100 includes a user interface 110 near the opening 104. The user interface 110 includes an input device 110A and an output device 110B. The input device 110A receives an input of various kinds of information from the user (e.g., a product ID of the article 10 that the user wants to purchase, and an order number of the article 10 that the user wants to take). As the input device 110A, for example, a keyboard, a button, a touch panel, a barcode reader, or a microphone is used. The output device 110B outputs various kinds of information to the user. As the output device 110B, for example, a display or a speaker is used.

### (Apparatus configuration of the pickup and delivery or selling apparatus 100)

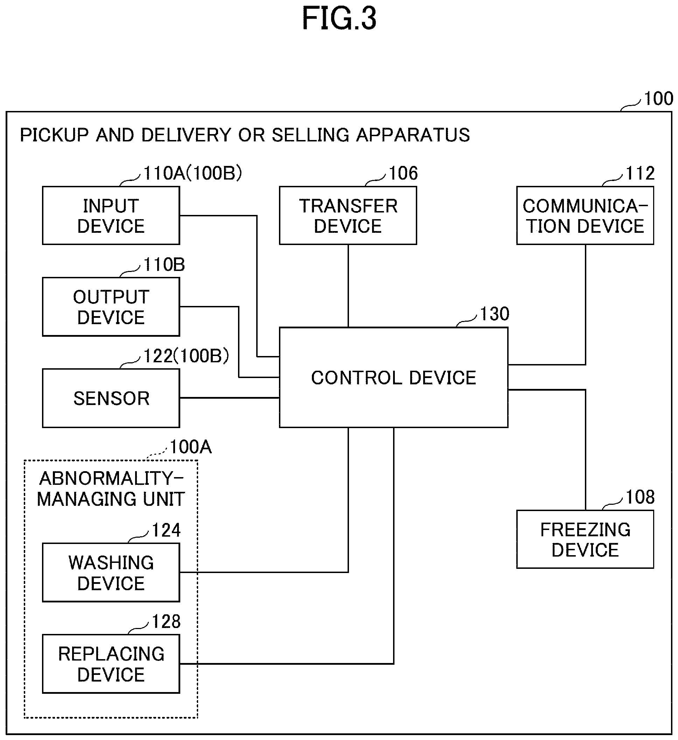

FIG. 2 is a cross-sectional lateral view, taken along a vertical plane (XZ plane), of the pickup and delivery or selling apparatus 100 according to one embodiment. FIG. 3 is a block diagram of one exemplary apparatus configuration of the pickup and delivery or selling apparatus 100 according to one embodiment.

As illustrated in FIG. 2, the reserving section 102 of the pickup and delivery or selling apparatus 100 includes a plurality of compartments 102A that can store a plurality of trays 12. The plurality of compartments 102A are provided in a matrix having a plurality of columns in a frontward-and-backward direction (Y-axis direction) and a plurality of rows in an upward-and-downward direction (Z-axis direction). When receiving the article 10, each of the plurality of trays 12 is transferred by the transfer device 106 to the opening 104, and after the article 10 has been placed by the user on the tray 12 at the opening 104, the tray 12 is transferred by the transfer device 106 to a predetermined compartment 102A of the reserving section 102. When delivering the article 10, each of the plurality of trays 12 is transferred by the transfer device 106 to the opening 104, and after the article 10 has been delivered to the user at the opening 104, the tray 12 alone is transferred by the transfer device 106 to a predetermined compartment 102A of the reserving section 102.

Also, as illustrated in FIG. 2, the pickup and delivery or selling apparatus 100 includes the transfer device 106. The transfer device 106 is one example of the "transfer unit". The transfer device 106 is configured to be able to transfer the tray 12 in the pickup and delivery or selling apparatus 100. For example, the transfer device 106 includes a rail 106A extending in a straight line in the frontward-and-backward direction (X-axis direction) and a rail 106B extending in a straight line in the upward-and-downward direction (Z-axis direction). By moving in the frontward-and-backward direction (X-axis direction) and in the upward-and-downward direction (Z-axis direction) along the rail 106A and the rail 106B, the transfer device 106 can move to an intended place (e.g., the compartment 102A or the opening 104). At the intended place, the transfer device 106 can hold the tray 12 or release the tray 12.

Also, as illustrated in FIG. 2 and FIG. 3, the pickup and delivery or selling apparatus 100 includes a freezing device 108. The freezing device 108 feeds cooled air into the reserving section 102, thereby cooling the interior of the reserving section 102. Thereby, the plurality of articles 10 reserved in the reserving section 102 are frozen or refrigerated for storage.

Also, as illustrated in FIG. 2 and FIG. 3, the pickup and delivery or selling apparatus 100 includes a sensor 122, a washing device 124, a storage part 126, and a replacing device 128 as configurations for managing the abnormality of the tray 12.

The sensor 122 is one exemplary abnormality-detecting unit 100B. The sensor 122 detects the abnormality of the tray 12. For example, the sensor 122 detects contamination of the tray 12. Also, for example, the sensor 122 detects damage of the tray 12 (e.g., cracking, chipping, or deformation). As the sensor 122, for example, a digital camera, an infrared sensor, an ultrasonic sensor, or the like is used. In the example as illustrated in FIG. 2, the sensor 122 is provided in the opening 104, and detects the abnormality of the tray 12 when the article 10 is received from and delivered to the user from the opening 104. Nonetheless, this is by no means a limitation, and for example, the sensor 122 may be provide in the reserving section 102 and detect the abnormality of the tray 12 reserved in the reserving section 102. Also, for example, the sensor 122 reads a management number assigned to the tray 12. As a method of reading the management number, for example, number image recognition, two-dimensional code reading, RFID reading, or the like is used. In this case, for example, based on the number of uses of the tray 12 of the same management number, the selling apparatus 100 may determine contamination of the tray 12 when the number of uses for washing has reached a predetermined number (e.g., 100 times) and may determine damage of the tray 12 when the number of uses for replacing has reached a larger predetermined number (e.g., 1000 times). Note that, the selling apparatus 100 resets the number of uses for washing when the tray 12 has been washed, and resets the number of uses for replacing when use of a new tray 12 has started.

The washing device 124 is one example of the "washing unit". The washing device 124 is included in the abnormality-managing unit 100A. The washing device 124 is provided at a predetermined place in the pickup and delivery or selling apparatus 100, and washes the tray 12. For example, the washing device 124 washes the tray 12 having contamination detected by the sensor 122 at the opening 104. For example, the washing device 124 sprays water to the tray 12, thereby washing the tray 12. Nonetheless, this is by no means a limitation, and for example, the washing device 124 may also wipe the tray 12 for washing the tray 12. Note that, when the user discovers contamination of the tray 12 at the opening 104, the user can use the input device 110A to notify the pickup and delivery or selling apparatus 100 of the contamination of the tray 12. In other words, the input device 110A can also serve as the abnormality-detecting unit 100B. In this case, the pickup and delivery or selling apparatus 100 may wash the tray 12 having been notified by the user of the contamination. The tray 12 washed by the washing device 124 is stored in the storage part 126. Also, the washing device 124 may have a drying function of drying the tray 12 washed with water, by means of warm air, wiping, or the like.

The storage part 126 is one example of the "storing unit". The storage part 126 is provided at a predetermined place in the pickup and delivery or selling apparatus 100, and stores the plurality of trays 12 without the abnormality (contamination and damage). The storage part 126 can notify a control device 130 of the following: the number of the trays 12 stored in the storage part 126; or the fact that the number of the trays 12 stored in the storage part 126 has become less than a predetermined threshold.

The replacing device 128 is one example of the "replacing unit". The replacing device 128 is included in the abnormality-managing unit 100A. The replacing device 128 replaces the tray 12 having the abnormality (contamination or damage) with the tray 12 without the abnormality. For example, the replacing device 128 replaces the tray 12 having the abnormality (contamination or damage) detected by the sensor 122 at the opening 104 with the tray 12 without the abnormality that is stored in the storage part 126. Also, for example, the replacing device 128 replaces the tray 12 having being notified by the user of the abnormality (contamination or damage) at the opening 104 with the tray 12 without the abnormality that is stored in the storage part 126. Note that, when replacing the tray 12 having contamination, the replacing device 128 may transfer the tray 12 to the washing device 124, thereby washing the tray 12 with the washing device 124. Also, when replacing the tray 12 having damage, the replacing device 128 may dispose of the tray 12 to a predetermined disposal site included in the pickup and delivery or selling apparatus 100. Also, the replacing device 128 may wash the tray 12 having the abnormality detected at the opening 104, with the washing device 124, and return the tray 12 after washing to the opening 104.

As illustrated in FIG. 2 and FIG. 3, the pickup and delivery or selling apparatus 100 includes a communication device 112. The communication device 112 can send and receive various kinds of data to and from an externally provided manager's terminal 16 through wireless communication via a network such as the Internet or a LAN (Local Area Network). For example, the pickup and delivery or selling apparatus 100 can make various notifications (e.g., a notification that the number of the trays 12 stored in the storage part 126 is insufficient) to the manager's terminal 16 via the communication device 112.

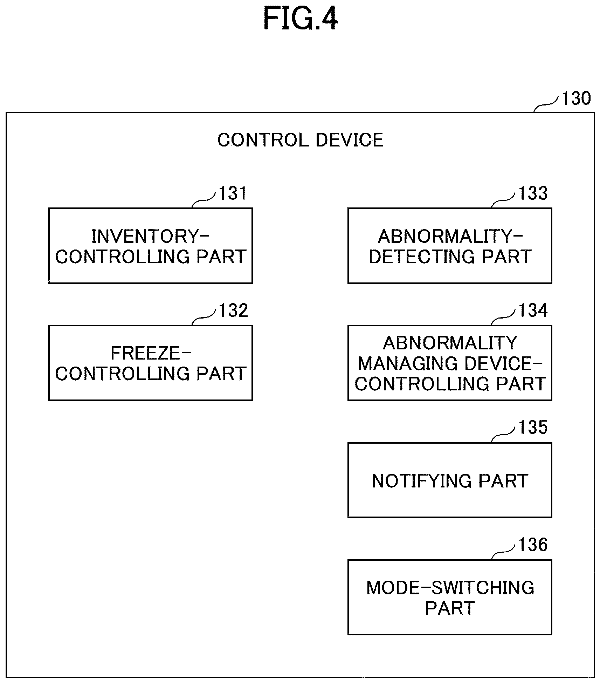

Also, as illustrated in FIG. 3, the pickup and delivery or selling apparatus 100 includes the control device 130. The control device 130 controls the entirety of the pickup and delivery or selling apparatus 100. Details of the function of the control device 130 will be described below using FIG. 4.

### (Functional configuration of the control device 130)

FIG. 4 is a block diagram of one exemplary functional configuration of the control device 130 included in the pickup and delivery or selling apparatus 100 according to one embodiment.

As illustrated in FIG. 4, the control device 130 includes an inventory-controlling part 131, a freeze-controlling part 132, an abnormality-detecting part 133, an abnormality managing device-controlling part 134, a notifying part 135, and a mode-switching part 136.

Note that, the control device 130 includes a CPU (Central Processing Unit), a ROM (Read Only Memory), a RAM (Random Access Memory), and the like. The above-described functions of the control device 130 are realized by, for example, a program stored in the ROM that is executed by the CPU in the control device 130.

The inventory-controlling part 131 controls incoming and outgoing deliveries of the article 10. For example, when receiving the article 10 from the user, the inventory-controlling part 131 instructs the transfer device 106 so as to transfer the tray 12 on which the article 10 has been placed by the user at the opening 104, to a predetermined compartment 102A of the reserving section 102. At this time, the inventory-controlling part 131 stores identification information input from the input device 110A (e.g., a product ID and an order number) in association with the compartment 102A. Also, when delivering the article 10 to the user, each of the plurality of the trays 12 identifies the compartment 102A in which the article 10 to be delivered is stored, based on the identification information input from the input device 110A (e.g., a product ID and an order number). Then, the inventory-controlling part 131 instructs the transfer device 106 so as to transfer, to the opening 104, the tray 12 (and the article 10) stored in the identified compartment 102A.

Note that, when the pickup and delivery or selling apparatus 100 is used for an application of selling the article 10, receipt of the article 10 from the user is, for example, replenishment of the article 10 by a seller. Also, when the pickup and delivery or selling apparatus 100 is used for an application of selling the article 10, delivery of the article 10 to the user is, for example, purchase of the article 10 by a purchaser.

Also, when the pickup and delivery or selling apparatus 100 is used for an application of picking up and delivering the article 10, receipt of the article 10 by the user is, for example, delivery of the article 10 by a deliverer. When the pickup and delivery or selling apparatus 100 is used for an application of picking up and delivering the article 10, delivery of the article 10 to the user is, for example, receipt of the article 10 by a receiver.

The freeze-controlling part 132 controls the freezing device 108. For example, the freeze-controlling part 132 controls the freezing device 108 such that the temperature in the reserving section 102 is maintained at a set temperature.

The abnormality-detecting part 133 detects the abnormality of the tray 12. For example, the abnormality-detecting part 133 detects the abnormality of the tray 12 based on information output from the sensor 122 (e.g., an image of the tray 12, a detection signal of infrared rays from the tray 12, and a detection signal of ultrasonic waves from the tray 12). Also, for example, when notified by the user of the abnormality of the tray 12 using the input device 110A, the abnormality-detecting part 133 detects the abnormality of the tray 12.

When the abnormality of the tray 12 is detected by the abnormality-detecting part 133, the abnormality managing device-controlling part 134 controls various abnormality-managing units 100A so as to perform a predetermined response to the abnormality. For example, the abnormality managing device-controlling part 134 controls the washing device 124 so as to wash the tray 12 having the abnormality detected. Also, for example, the abnormality managing device-controlling part 134 controls the replacing device 128 so as to replace the tray 12 having the abnormality detected with the tray 12 stored in the storage part 126.

The abnormality managing device-controlling part 134 may judge, based on predetermined conditions, whether the tray 12 having the abnormality detected is washed or replaced. For example, the abnormality managing device-controlling part 134 may judge whether that tray 12 is washed or replaced in accordance with the extent of contamination of the tray 12 detected by the abnormality-detecting part 133. For example, when an indicator for the extent of contamination of the tray 12 detected by the abnormality-detecting part 133 is less than a predetermined threshold, the abnormality managing device-controlling part 134 may wash that tray 12, and when the indicator is more than the predetermined threshold, the abnormality managing device-controlling part 134 may replace that tray 12.

Also, the abnormality managing device-controlling part 134 may judge, based on predetermined conditions, whether the tray 12 having the abnormality detected is washed or replaced. For example, when an indicator for the extent of contamination of the tray 12 detected by the abnormality-detecting part 133 is less than a predetermined threshold, the abnormality managing device-controlling part 134 does not necessarily wash that tray 12. Also, for example, when the indicator for the extent of damage of the tray 12 detected by the abnormality-detecting part 133 is less than a predetermined threshold, the abnormality managing device-controlling part 134 does not necessarily replace that tray 12.

The notifying part 135 is one example of the "notifying unit". The notifying part 135 makes various notifications to the manager's terminal 16 through wireless communication using the communication device 112. For example, when the number of the trays 12 stored in the storage part 126 has become less than a predetermined lower limit, the notifying part 135 notifies the manager's terminal 16 that the number of the trays 12 is insufficient. Thereby, for example, the user using the manager's terminal 16 can instruct a managing operator, who performs management operations of the pickup and delivery or selling apparatus 100, so as to replenish the storage part 126 with the tray 12. Nonetheless, this is by no means a limitation, and when meeting various conditions for notification that are set by, for example, a managing operator, the notifying part 135 may make various notifications to the manager's terminal 16 (e.g., an abnormality of the washing device 124, an abnormality of the replacing device 128, and an abnormality of the transfer device 106). Also, a notification destination of the notifying part 135 is not limited to the manager's terminal 16. For example, the notifying part 135 may make various notifications to a portable terminal (e.g., a smartphone or a tablet terminal) that is possessed by the managing operator of the pickup and delivery or selling apparatus 100.

The mode-switching part 136 switches an operation mode of the pickup and delivery or selling apparatus 100. For example, the pickup and delivery or selling apparatus 100 has a "service-providing mode" and a "service-suspending mode".

The "service-providing mode" is an operation mode applied when the pickup and delivery or selling apparatus 100 provides services (pickup and delivery of the article 10 or selling of the article 10). When the pickup and delivery or selling apparatus 100 is in the "service-providing mode", the function of pickup and delivery or selling is operated. Also, when the pickup and delivery or selling apparatus 100 is in the "service-providing mode", the abnormality-managing unit 100A performs a response to the abnormality of the tray 12. Also, when the pickup and delivery or selling apparatus 100 is in the "service-providing mode", the freezing device 108 operates freezing and refrigerating functions.

A "transport mode" is an operation mode applied when the pickup and delivery or selling apparatus 100 does not provide services (pickup and delivery of the article 10 or selling of the article 10). For example, the "transport mode" is applied when the pickup and delivery or selling apparatus 100 is transported. When the pickup and delivery or selling apparatus 100 is in the "service-suspending mode", the function of pickup and delivery or selling is suspended. Also, when the pickup and delivery or selling apparatus 100 is in the "service-suspending mode", the abnormality-managing unit 100A does not perform a response to the abnormality of the tray 12. Thereby, for example, during transportation of the pickup and delivery or selling apparatus 100, it is possible to avoid operating of the abnormality-managing unit 100A in the pickup and delivery or selling apparatus 100, and to suppress a breakdown and the like of the abnormality-managing unit 100A. Also, when the pickup and delivery or selling apparatus 100 is in the "service-suspending mode", the freezing device 108 operates freezing and refrigerating functions. Thereby, even when the pickup and delivery or selling apparatus 100 does not provide services (pickup and delivery of the article 10 or selling of the article 10), the pickup and delivery or selling apparatus 100 can freeze or refrigerate the article 10 reserved in the reserving section 102 for storage.

Note that, switching between the operation modes by the mode-switching part 136 can be instructed from, for example: a portable terminal possessed by an operator who transports and installs the pickup and delivery or selling apparatus 100; the input device 110A or a dedicated switch included in the pickup and delivery or selling apparatus 100; or the manager's terminal 16.

### (One exemplary procedure of abnormality-managing process)

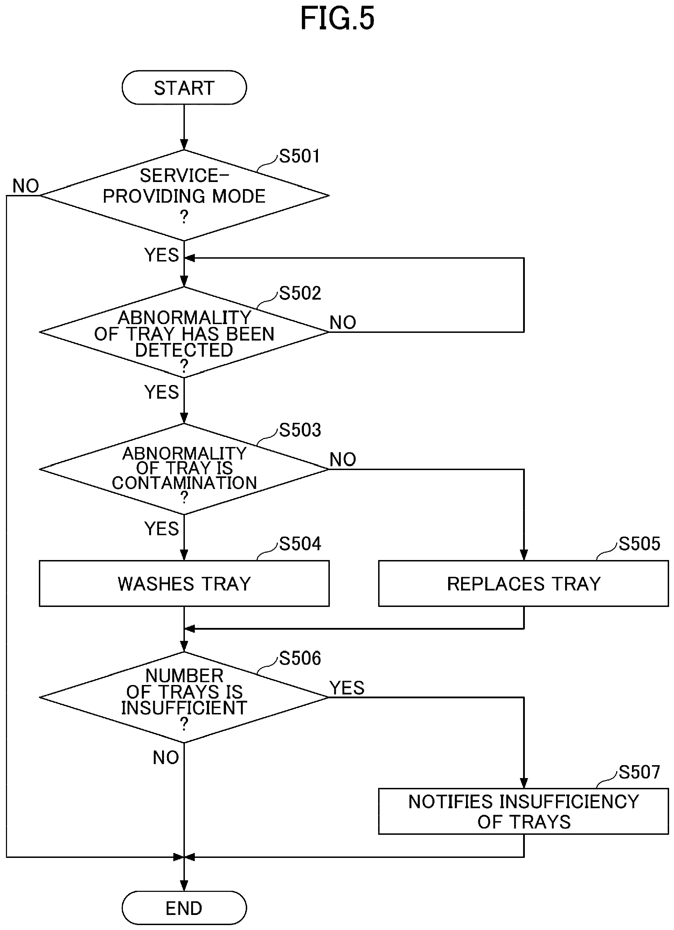

FIG. 5 is a flowchart of one exemplary procedure of an abnormality-managing process by the control device 130 included in the pickup and delivery or selling apparatus 100 according to one embodiment.

First, the mode-switching part 136 judges whether the operation mode of the pickup and delivery or selling apparatus 100 is the "service-providing mode" (step S501).

In step S501, when it is judged that the pickup and delivery or selling apparatus 100 is not in the "service-providing mode" (i.e., is in the "service-suspending mode") (step S501: No), the control device 130 ends a series of the abnormality-managing process as illustrated in FIG. 5.

Meanwhile, in step S501, when it is judged that the pickup and delivery or selling apparatus 100 is in the "service-providing mode" (step S501: Yes), whether the abnormality-detecting part 133 has detected an abnormality (contamination or damage) of the tray 12 is judged (step S502). For example, the abnormality-detecting part 133 detects the abnormality of the tray 12 based on information output from the sensor 122 (e.g., an image and a detection signal) or on a notification from the user using the input device 110A.

In step S502, when it is judged that no abnormality of the tray 12 has been detected (step S502: No), the control device 130 performs step S502 again.

Meanwhile, in step S502, when it is judged that an abnormality of the tray 12 has been detected (step S502: Yes), the abnormality managing device-controlling part 134 judges whether the abnormality of the tray 12 detected by the abnormality-detecting part 133 is contamination (step S503) .

In step S503, when it is judged that the abnormality of the tray 12 is contamination (step S503: Yes), the abnormality managing device-controlling part 134 controls the washing device 124 so as to wash the tray 12 having the abnormality detected (step S504). Subsequently, the control device 130 advances the process to step S506.

Meanwhile, in step S503, when it is judged that the abnormality of the tray 12 is not contamination (i.e., is damage) (step S503: No), the abnormality managing device-controlling part 134 controls the replacing device 128 so as to replace the tray 12 having the abnormality detected with the tray 12 stored in the storage part 126 (step S505). Subsequently, the control device 130 advances the process to step S506.

In step S506, the notifying part 135 judges whether the number of the trays 12 stored in the storage part 126 is insufficient (i.e., the number thereof has become a predetermined lower limit).

In step S506, when it is judged that the number of the trays 12 is not insufficient (step S506: No), the control device 130 ends a series of the abnormality-managing process as illustrated in FIG. 5.

Meanwhile, in step S506, when it is judged that the number of the trays 12 is insufficient (step S506: Yes), the notifying part 135 notifies the manager's terminal 16 that the number of the trays 12 is insufficient through wireless communication using the communication device 112 (step S507). Subsequently, the control device 130 ends a series of the abnormality-managing process as illustrated in FIG. 5.

### (First modified example)

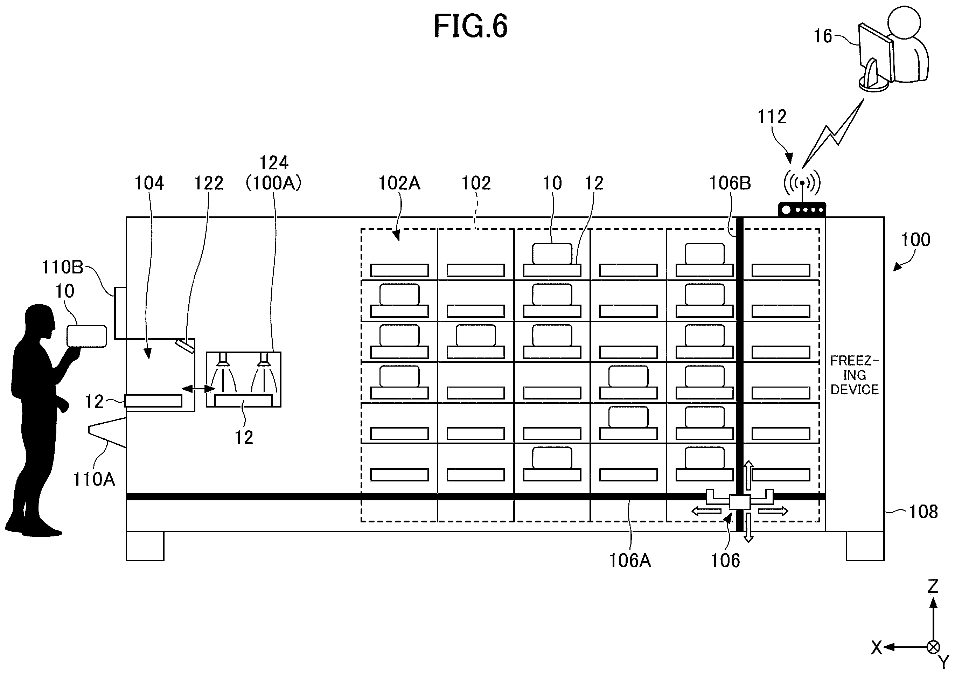

FIG. 6 is a cross-sectional lateral view, taken along a vertical plane (XZ plane), of the pickup and delivery or selling apparatus 100 according to a first modified example.

As illustrated in FIG. 6, in the pickup and delivery or selling apparatus 100 according to the first modified example, the washing device 124 is provided near the opening 104. Thereby, when contamination of the tray 12 is detected at the opening 104, the pickup and delivery or selling apparatus 100 according to the first modified example can immediately wash that tray 12 and return that tray 12 after washing to the opening 104.

### (Second modified example)

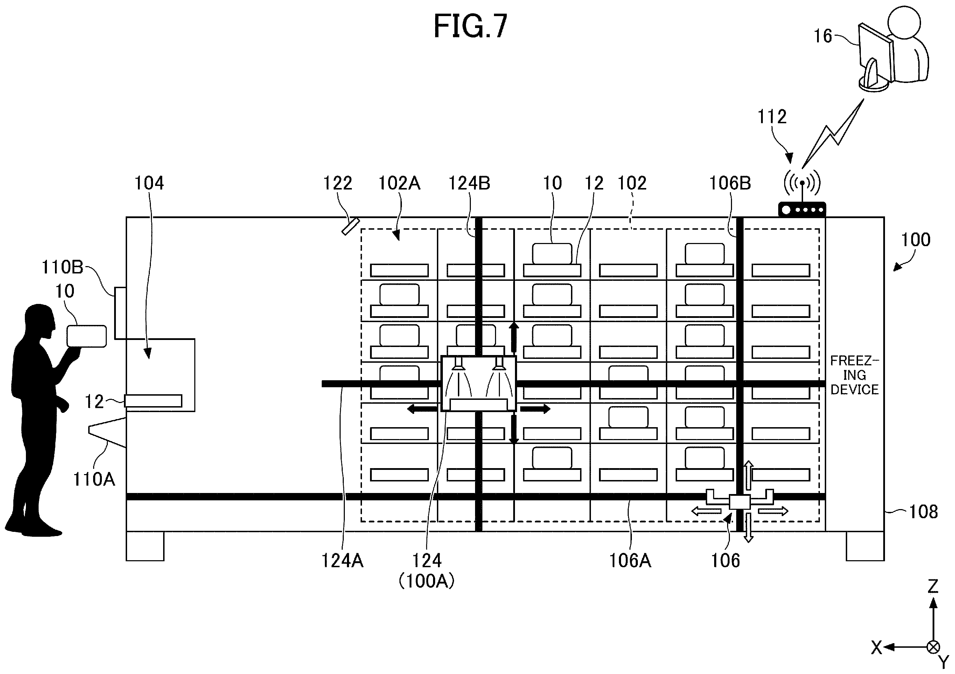

FIG. 7 is a cross-sectional lateral view, taken along a vertical plane (XZ plane), of the pickup and delivery or selling apparatus 100 according to a second modified example.

As illustrated in FIG. 7, in the pickup and delivery or selling apparatus 100 according to the second modified example, the washing device 124 is movable to each of the compartments 102A in the reserving section 102. For example, as illustrated in FIG. 7, the washing device 124 includes a rail 124A extending in a straight line in the frontward-and-backward direction (X-axis direction) and a rail 124B extending in a straight line in the upward-and-downward direction (Z-axis direction).

Also, in the pickup and delivery or selling apparatus 100 according to the second modified example, the sensor 122 is provided in the reserving section 102, and can detect failures of each of the plurality of the trays 12 stored in the reserving section 102.

According to the pickup and delivery or selling apparatus 100 according to the second modified example, when contamination of any one of the trays 12 stored in the reserving section 102 is detected by the sensor 122, the washing device 124 can move to the compartment 102A in which that tray 12 is stored, and wash that tray 12 there.

Note that, in the example as illustrated in FIG. 7, the washing device 124 is configured to be movable separately from the transfer device 106. Nonetheless, this is by no means a limitation, and the washing device 124 may be configured to be movable integrally with the transfer device 106.

### (Third modified example)

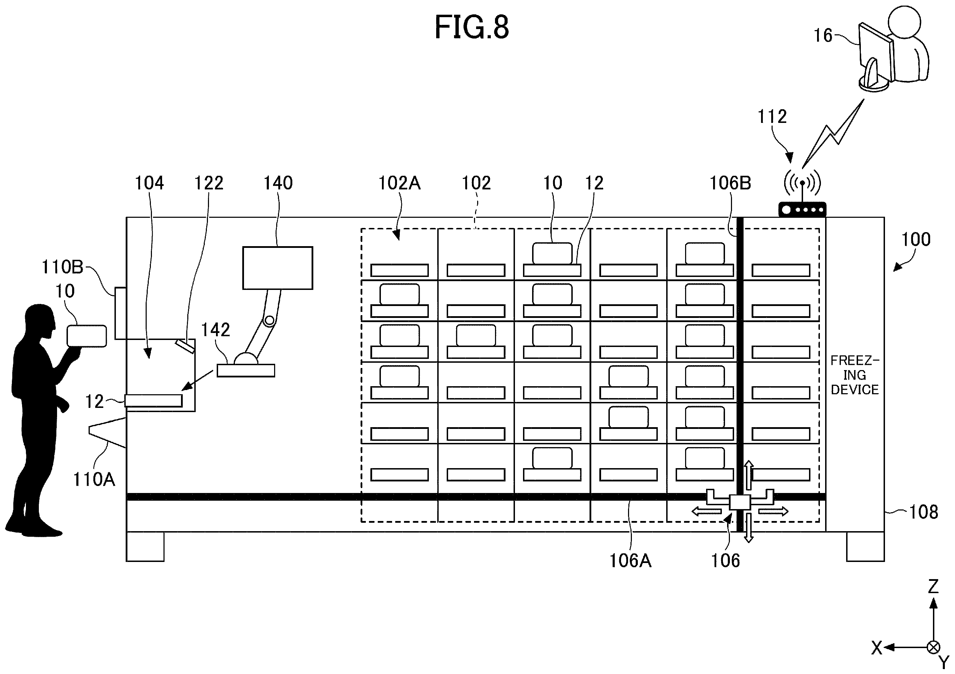

FIG. 8 is a cross-sectional lateral view, taken along a vertical plane (XZ plane), of the pickup and delivery or selling apparatus 100 according to a third modified example.

As illustrated in FIG. 8, the pickup and delivery or selling apparatus 100 according to the third modified example includes an adding device 140 as the abnormality-managing unit 100A. The adding device 140 is one example of the "adding unit". The adding device 140 adds a member to the tray 12 having the abnormality (contamination or damage) detected by the abnormality-detecting part 133, the member being configured to overcome the abnormality.

In the example as illustrated in FIG. 8, the adding device 140 places a sheet member 142 (one exemplary "member configured to overcome the abnormality") on the surface of the tray 12 having the abnormality detected at the opening 104. As the sheet member 142, for example, a paper sheet, a cloth sheet, a rubber sheet, or the like is used.

Thereby, the pickup and delivery or selling apparatus 100 according to the third modified example can cover the surface of the tray 12 having the abnormality detected, with the sheet member 142. Therefore, the pickup and delivery or selling apparatus 100 according to the third modified example can make the abnormality of the tray 12 less-visible to the user. Also, the pickup and delivery or selling apparatus 100 according to the third modified example can suppress adhesion of contamination to the article 10.

### (Operations and effects)

As described above, the pickup and delivery or selling apparatus 100 according to one embodiment is the transportable pickup and delivery or selling apparatus 100, and includes: the reserving section 102 in which the article 10 can be reserved; the opening 104 via which the article 10 to be stored in the reserving section 102 is received and the article 10 is delivered; the plurality of the trays 12 each used for supporting the article 10 in the reserving section 102; the transfer device 106 configured to transfer the tray 12 supporting the article 10 between the reserving section 102 and the opening 104; and the abnormality-managing unit 100A configured to perform a predetermined response to an abnormality occurring in the tray 12.

Thereby, the pickup and delivery or selling apparatus 100 according to one embodiment can perform the predetermined response to the abnormality occurring in the tray 12. Therefore, the pickup and delivery or selling apparatus 100 according to one embodiment can suppress unpleasant feelings which would otherwise be given to the user, and adverse influences (e.g., adhesion of contamination and scratches) which would otherwise be given to the user and the article 10 due to the abnormality of the tray 12.

In the pickup and delivery or selling apparatus 100 according to one embodiment, the abnormality-managing unit 100A does not necessarily perform the predetermined response while the function of the pickup and delivery or selling is suspended in the pickup and delivery or selling apparatus 100.

Thereby, according to the pickup and delivery or selling apparatus 100 according to one embodiment, it is possible to avoid operating of the abnormality-managing unit 100A while the function of the pickup and delivery or selling is suspended in the pickup and delivery or selling apparatus 100, and to suppress an unnecessary operation of the abnormality-managing unit 100A.

In the pickup and delivery or selling apparatus 100 according to one embodiment, the abnormality-managing unit 100A does not necessarily perform the predetermined response while the pickup and delivery or selling apparatus 100 is transported.

Thereby, according to the pickup and delivery or selling apparatus 100 according to one embodiment, it is possible to avoid operating of the abnormality-managing unit 100A while the pickup and delivery or selling apparatus 100 is transported, and to suppress a breakdown and the like of the abnormality-managing unit 100A.

In the pickup and delivery or selling apparatus 100 according to one embodiment, the article 10 may be fruits and vegetables, pharmaceutical products, or processed foods, and the reserving section 102 may freeze or refrigerate the article 10 for storage.

Thereby, according to the pickup and delivery or selling apparatus 100 according to one embodiment, it is possible to freeze or refrigerate fruits and vegetables, pharmaceutical products, or processed foods for storage, and to perform the predetermined response to the abnormality occurring in the tray 12 supporting fruits and vegetables, pharmaceutical products, or processed foods.

In the pickup and delivery or selling apparatus 100 according to one embodiment, the abnormality-detecting unit 100B configured to detect the abnormality of the tray 12 may be further included, and the abnormality-managing unit 100A may perform the predetermined response to the tray 12 having the abnormality detected by the abnormality-detecting unit 100B.

Thereby, according to the pickup and delivery or selling apparatus 100 according to one embodiment, it is possible to detect the abnormality occurring in the tray 12, and to perform the predetermined response to that abnormality. Therefore, the pickup and delivery or selling apparatus 100 according to one embodiment can suppress unpleasant feelings which would otherwise be given to the user, and adverse influences (e.g., adhesion of contamination and scratches) which would otherwise be given to the user and the article 10 due to the abnormality of the tray 12.

In the pickup and delivery or selling apparatus 100 according to one embodiment, the abnormality-managing unit 100A may include the washing device 124 configured to wash the tray 12 having the abnormality.

Thereby, according to the pickup and delivery or selling apparatus 100 according to one embodiment, it is possible to wash the tray 12 having the abnormality. Therefore, the pickup and delivery or selling apparatus 100 according to one embodiment can suppress unpleasant feelings which would otherwise be given to the user, and adverse influences (e.g., adhesion of contamination) which would otherwise be given to the user and the article 10 due to the abnormality of the tray 12.

In the pickup and delivery or selling apparatus 100 according to one embodiment, the abnormality-managing unit 100A may include the replacing device 128 configured to replace the tray 12 having the abnormality with the tray 12 without the abnormality.

Thereby, according to the pickup and delivery or selling apparatus 100 according to one embodiment, it is possible to replace the tray 12 having the abnormality with the tray 12 without the abnormality. Therefore, the pickup and delivery or selling apparatus 100 according to one embodiment can suppress unpleasant feelings which would otherwise be given to the user, and adverse influences (e.g., adhesion of contamination and scratches) which would otherwise be given to the user and the article 10 due to the abnormality of the tray 12.

In the pickup and delivery or selling apparatus 100 according to one embodiment, the abnormality-detecting unit 100B may detect the input by the user regarding the abnormality of the tray 12, and the replacing device 128 may replace the tray 12 having the abnormality detected based on the input with the tray 12 without the abnormality.

Thereby, according to the pickup and delivery or selling apparatus 100 according to one embodiment, it is possible to replace the tray 12 having the abnormality found out by the user with the tray 12 without the abnormality. Therefore, the pickup and delivery or selling apparatus 100 according to one embodiment can suppress unpleasant feelings which would otherwise be given to the user, and adverse influences (e.g., adhesion of contamination and scratches) which would otherwise be given to the user and the article 10 due to the abnormality of the tray 12.

In the pickup and delivery or selling apparatus 100 according to one embodiment, the abnormality-detecting unit 100B may detect the damage of the tray 12, and the replacing device 128 may replace the tray 12 having the damage detected by the abnormality-detecting unit 100B with the tray 12 without the abnormality.

Thereby, according to the pickup and delivery or selling apparatus 100 according to one embodiment, it is possible to replace the tray 12 having the damage detected with the tray 12 without the abnormality. Therefore, the pickup and delivery or selling apparatus 100 according to one embodiment can suppress unpleasant feelings which would otherwise be given to the user, and adverse influences (e.g., scratches) which would otherwise be given to the user and the article 10 due to the damage of the tray 12.

In the pickup and delivery or selling apparatus 100 according to one embodiment, the abnormality-detecting unit 100B may detect the contamination of the tray 12, and the abnormality-managing unit 100A may wash the tray 12 having the contamination detected by the abnormality-detecting unit 100B or replace that tray 12 with the tray 12 without the abnormality.

Thereby, according to the pickup and delivery or selling apparatus 100 according to one embodiment, it is possible to replace the tray 12 having the contamination detected with the tray 12 without the abnormality. Therefore, the pickup and delivery or selling apparatus 100 according to one embodiment can suppress unpleasant feelings which would otherwise be given to the user, and adverse influences (e.g., adhesion of contamination) which would otherwise be given to the user and the article 10 due to the contamination of the tray 12.

In the pickup and delivery or selling apparatus 100 according to one embodiment, the storage part 126 configured to store the plurality of the trays 12 without the abnormality may be further included, and the abnormality-managing unit 100A may replace the tray 12 having the abnormality with the tray 12 without the abnormality that is stored in the storage part 126.

Thereby, according to the pickup and delivery or selling apparatus 100 according to one embodiment, it is possible to immediately replace the tray 12 having the abnormality with the tray 12 without the abnormality that is stored in the storage part 126. Also, according to the pickup and delivery or selling apparatus 100 according to one embodiment, even when the plurality of the trays 12 have the abnormality, it is possible to immediately replace each of the plurality of the trays 12 with the tray 12 without the abnormality.

In the pickup and delivery or selling apparatus 100 according to one embodiment, the notifying part 135 configured to notify insufficiency in the number of the trays 12 in response to the number of the trays 12 stored in the storage part 126 becoming less than a predetermined lower limit may be further included.

Thereby, according to the pickup and delivery or selling apparatus 100 according to one embodiment, it is possible to tell the operator or the like to replenish the storage part 126 with the tray 12 at an early stage, and to avoid a situation in which the number of the trays 12 for replacement becomes zero.

In the pickup and delivery or selling apparatus 100 according to one embodiment, the abnormality-managing unit 100A may include the adding device 140 configured to add the sheet member 142 to the tray 12 having the abnormality.

Thereby, according to the pickup and delivery or selling apparatus 100 according to one embodiment, it is possible to cover and conceal the abnormality of the tray 12 with the sheet member 142. Therefore, the pickup and delivery or selling apparatus 100 according to one embodiment can suppress unpleasant feelings which would otherwise be given to the user, and adverse influences (e.g., adhesion of contamination and scratches) which would otherwise be given to the user and the article 10 due to the abnormality of the tray 12.

While the embodiments have been described above, it should be understood that various changes to the forms and details are possible without departing from the gist and scope of the claims recited. Various alterations and improvements such as combinations and substitutions with a part or the entirety of other embodiments are possible.

The present international application claims priority based on Japanese Patent Application No. 2021-059439 filed on March 31, 2021, and the entire contents of this Japanese patent application are hereby incorporated by reference.

### [Reference Signs List]

10 article
12 tray
16 manager's terminal
100 pickup and delivery or selling apparatus
100A abnormality-managing unit
100B abnormality-detecting unit
102 reserving section
102A compartment
104 opening
106 transfer device
106A,106B rail
108 freezing device
110 user interface
110A input device
110B output device
122 sensor
124 washing device
124A,124B rail
126 storage part
128 replacing device
130 control device
131 inventory-controlling part
132 freeze-controlling part
133 abnormality-detecting part
134 abnormality managing device-controlling part
135 notifying part
136 mode-switching part
140 adding device
142 sheet member

## Claims

1. A pickup and delivery or selling apparatus that is transportable, the apparatus comprising:
a reserving section in which an article can be reserved;
a receiving part in which the article to be reserved in the reserving section is received;
a delivering part in which the article is delivered;
a plurality of support members each used for supporting the article in the reserving section;
a transfer unit configured to transfer the support members each supporting the article between the reserving section and either the receiving part or the delivering part; and
an abnormality-managing unit configured to perform a predetermined response to an abnormality occurring in the support members.

2. The pickup and delivery or selling apparatus according to claim 1, wherein the abnormality-managing unit does not perform the predetermined response while a function of the pickup and delivery or selling is suspended in the pickup and delivery or selling apparatus.

3. The pickup and delivery or selling apparatus according to claim 1 or 2, wherein the abnormality-managing unit does not perform the predetermined response while the pickup and delivery or selling apparatus is transported.

4. The pickup and delivery or selling apparatus according to any one of claims 1 to 3, wherein:
the article is fruits and vegetables, pharmaceutical products, or processed foods; and
the reserving section freezes or refrigerates the article for storage.

5. The pickup and delivery or selling apparatus according to any one of claims 1 to 4, further comprising: an abnormality-detecting unit configured to detect the abnormality of the support members,
the abnormality-managing unit performs the predetermined response to the support members having the abnormality detected by the abnormality-detecting unit.

6. The pickup and delivery or selling apparatus according to claim 5, wherein the abnormality-managing unit includes a washing unit configured to wash the support members having the abnormality.

7. The pickup and delivery or selling apparatus according to claim 5 or 6, wherein the abnormality-managing unit includes a replacing unit configured to replace the support members having the abnormality with the support members without the abnormality.

8. The pickup and delivery or selling apparatus according to claim 7, wherein:
the abnormality-detecting unit detects an input by a user regarding the abnormality of the support members; and
the replacing unit replaces the support members having the abnormality detected based on the input with the support members without the abnormality.

9. The pickup and delivery or selling apparatus according to claim 7 or 8, wherein:
the abnormality-detecting unit detects damage of the support members; and
the replacing unit replaces the support members having the damage detected by the abnormality-detecting unit with the support members without the abnormality.

10. The pickup and delivery or selling apparatus according to any one of claims 5 to 9, wherein:
the abnormality-detecting unit detects contamination of the support members; and
the abnormality-managing unit washes the support members having the contamination detected by the abnormality-detecting unit or replaces the support members having the contamination detected by the abnormality-detecting unit with the support members without the abnormality.

11. The pickup and delivery or selling apparatus according to any one of claims 5 to 10, further comprising:
a storing unit configured to store the plurality of the support members without the abnormality,
the abnormality-managing unit replaces the support members having the abnormality with the support members without the abnormality that are stored in the storing unit.

12. The pickup and delivery or selling apparatus according to claim 11, further comprising:
a notifying unit configured to notify insufficiency in a number of the support members in response to a number of the support members stored in the storing unit becoming less than a predetermined lower limit.

13. The pickup and delivery or selling apparatus according to any one of claims 1 to 12, wherein the abnormality-managing unit includes an adding unit configured to add a member to the support members having the abnormality, the member being configured to overcome the abnormality.
